# EUROPÄISCHE PATENTANMELDUNG

(11) **EP 0 682 153 A1**
(43) Veröffentlichungstag der Anmeldung: **15.11.1995**
(21) Anmeldenummer: 95106623.2
(22) Anmeldetag: 03.05.1995
(51) Int. Cl.: E03B 3/02, E04D 13/08

(54) **Verfahren und Vorrichtung zum Reinigen des Wassers in dem Zulauf zum Regenwasserspeicher**

(30) Priorität: 14.05.1994 DE 4417055
(71) Anmelder: Neumüller, Peter, D-63128 Dietzenbach (DE)
(72) Erfinder: Neumüller, Peter, D-63128 Dietzenbach (DE)

(57) **Zusammenfassung**

Sowohl aus technischen als auch aus hygienischen Gründen ist es wichtig, das Regenwasser zu reinigen und nur ein mit angemessenem Aufwand nicht vermeidbares Mindestmaß an Verunreinigungen in den Speicher, z.B. Zisterne gelangen zu lassen. Die gegenwärtig verwendeten Filter weisen einen geringen Regenwassererfassungsgrad auf, sind umständlich in der Reinigung und bedürfen zum großen Teil einer regelmäßigen Wartung. Das neue Verfahren und die Vorrichtung dazu sollen einen hohen Regenwassererfassungsgrad haben, einfach zu reinigen sein und sehr lange wartungsfreie Standzeiten aufweisen.

Die Vorrichtung weist mehrere mit Filtergewebe (12,15) überspannte Taschen (13) auf. An dem Filtergewebe (12,15) werden die im Regenwasser enthaltenen Verunreinigungen abgeschieden und mit einem Teilstrom in das Entwässerungssystem transportiert. Über die Taschen (13) wird das derart gereingte Regenwasser zu einem separaten Anschluß (14) und weiter in den Speicher geleitet.

## Beschreibung

Aus ökologischen und zunehmend aus wirtschaftlichen Gründen wird für viele Zwecke im Haushalt, Gewerbe und in Industrie Regenwasser eingesetzt. Sowohl aus technischen als auch aus hygienischen Gründen ist es wichtig, das Regenwasser zu reinigen und nur ein mit angemessenem Aufwand nicht vermeidbares Mindestmaß an Verunreinigungen in den Speicher, z.B. Zisterne gelangen zu lassen.

Es ist bekannt, Auffang- und Filtervorrichtungen für Regenwasser sowohl im Fallrohr eines Hauses als auch im Erdreich vor dem Speicherzulauf vorzusehen (siehe DE 3812136 A1, DE 3819962 A1, DE 3404792 A1, G 8406826.4, G 9304376.7, G 8404041.6, G 9304952.8, EO 517202A1, DE 3537609A1, G 8704288.6).

Durch das Gebrauchsmuster G 9304376.7 ist eine Einrichtung zum Ableiten von Regenwasser aus einem Regenrohr mit integriertem Filtertopf bekannt. Die Nachteile dieser Einrichtung sind offensichtlich:
- Es existiert nur eine Filterfläche. Damit eine möglichst hohe Regenwassererfassung erfolgt, kann die Maschenweite des Filtersiebes nicht beliebig verkleinert werden, da dies zwangsweise zu einer abnehmenden freien Filterfläche und somit zu Erfassungs-Verlusten führt.
- Bedingt durch das Erfassungsprinzip des Regenwassers wird für die Filterfläche ein Neigungswinkel von 20° bevorzugt. Grobe Schmutzanteile, deren Querschnitt größer als die aktuell verwendete Maschenweite, aber kleiner als die Maschenweite des den ganzen Rohrquerschnitt überspannenden Grobsiebes ist, können an der Filterfläche haften bleiben, den Erfassungsgrad bedeutend reduzieren, längerfristig zu einer Verstopfung der Einrichtung, aber auch zu hygienischen Problemen führen.
- Ein Abweiser ist notwendig, um möglichst das gesamte Regenwasser auf die Filterfläche zu leiten.
- Die Gefahr von großflächigen Verstopfungen der Filterfläche wird durch das Vorsehen eines Grobsiebes reduziert. Damit dieses Grobsieb selbst nicht verstopft, muß es regelmäßig gewartet werden.
- Über die vorgesehene Öffnung ist nur das Grobsieb zu erreichen. Zu Reinigungszwecken der übrigen Teile muß die Einrichtung aus dem Regenrohr ausgebaut werden.

Der in Schutzansprüchen 1-8 angegebenen Erfindung liegt das Problem zugrunde, das Regenwasser im Zulauf zu dem Speicher auf eine sehr wartungsarme, einfache und effektive Weise zu reinigen, die Schmutzansammlung in dem Speicher zu verhindern und damit hygienische Probleme und Betriebsstörungen im Entnahmesystem zu vermeiden.

Dieses Problem wird durch die in den Schutzansprüchen 1-8 aufgeführten Merkmale gelöst.

Die mit der Erfindung erzielten Vorteile bestehen insbesondere darin, daß eine effektive und preisgünstige sowie eine verstopfungssichere Reinigung des Regenwassers möglich wird. Die großen Filterflachen lassen eine Maschenweite von 0,1 mm und kleiner bei einem Erfassungsgrad von über 95% zu. Der wartungsfreie Betrieb ermöglicht den Einsatz der Vorrichtung auch im gewerblichen Bereich der Regenwassernutzung. Darüberhinaus wird die Gefahr einer mikrobiellen Verkeimung des Speicherwassers wesentlich verringert.

Eine vorteilhafte Ausgestaltung der Erfindung ist in den Schutzansprüchen 2 und 7 angegeben. Die Weiterbildung nach Anspruch 2 ermöglicht es dem Anwender vor Ort, die dem örtlichen Schmutzanfall angemessene Maschenweite auszuwählen. Darüberhinaus ist es möglich, verstopfte Filterelemente, die nicht mehr gereinigt werden können, gegen neue auszutauschen.

Eine weitere vorteilhafte Ausgestaltung der Erfindung ist im Schutzanspruch 3 angegeben. Die Weiterbildung nach Anspruch 3 gewährleistet einen hohen Erfassungsgrad des Regenwassers und einen rückstaufreien Betrieb der Vorrichtung bei extremen Regenereignissen.

Eine zusätzliche vorteilhafte Ausgestaltung der Erfindung ist im Schutzanspruch 4 angegeben. Die Weiterbildung nach Anspruch 4 ermöglicht es, stets 100% des anfallenden Regenwassers in der Vorrichtung zu nutzen.

Eine weitere vorteilhafte Ausgestaltung der Erfindung ist im Schutzanspruch 6 angegeben. Die Weiterbildung nach Anspruch 5 ermöglicht es, die Vorrichtung in die gebräuchlichsten bauseits vorhandenen an den Speicher angeschlossenen regenwasserführenden Rohre mit unterschiedlichen Durchmessern zu installieren. Darüberhinaus ist die Reinigung der Vorrichtung ohne Ausbau aus dem Regenrohr möglich.

Eine weitere vorteilhafte Ausgestaltung der Erfindung ist im Schutzanspruch 8 angegeben. Die Weiterbildung nach Anspruch 8 ermöglicht es, die Vorrichtung bei tiefen Temperaturen frostsicher zu betreiben.

Ein Ausführungsbeispiel der Erfindung wird im folgenden näher beschrieben. Es zeigen:

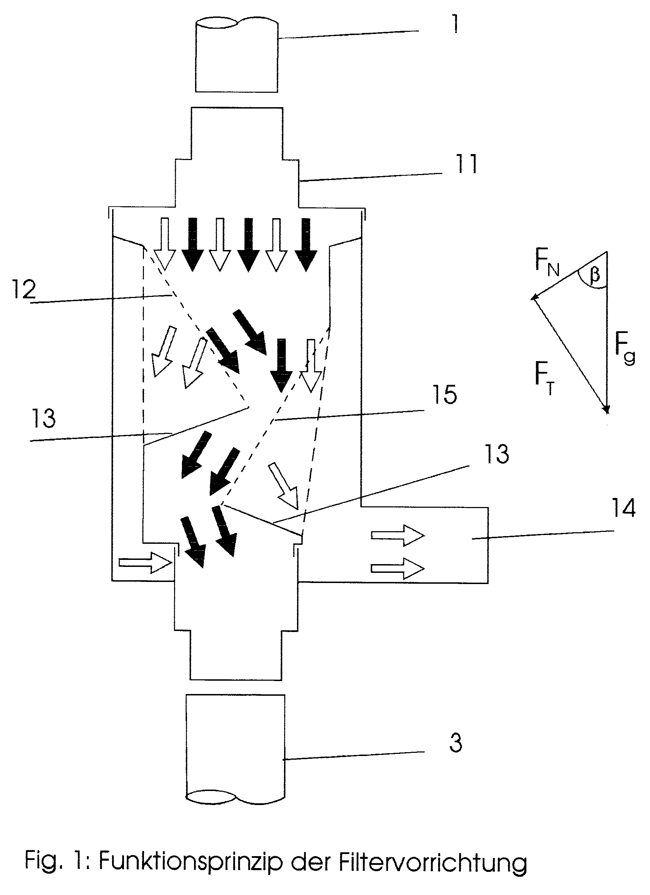

Fig. 1 das Funktionsprinzip der Filtervorrichtung,
Fig. 2 die Filtervorrichtung,
Fig. 3 Anschluß der Filtervorrichtung im Regenrohr vor dem Speicher.

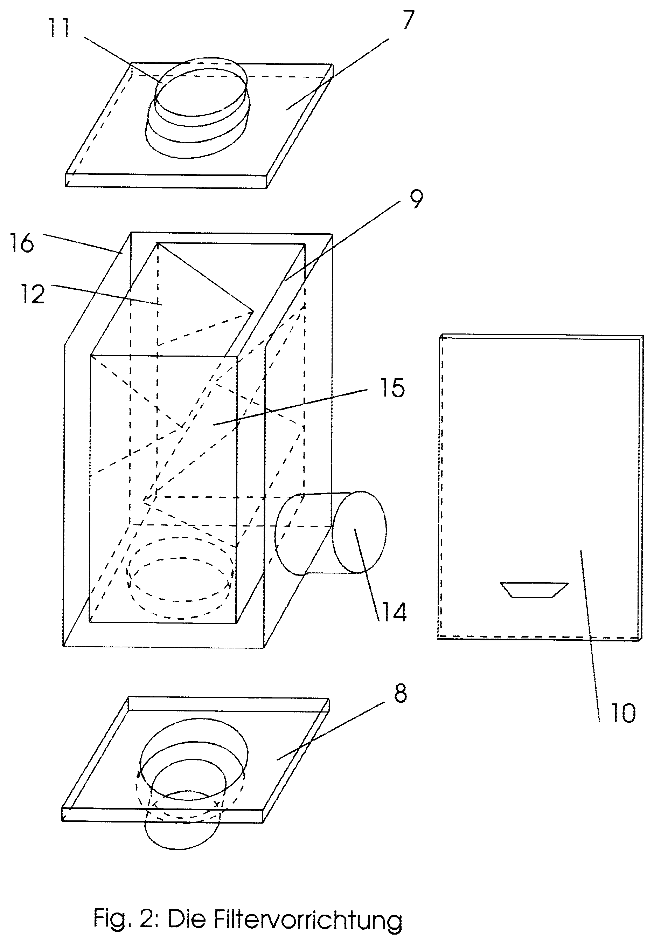

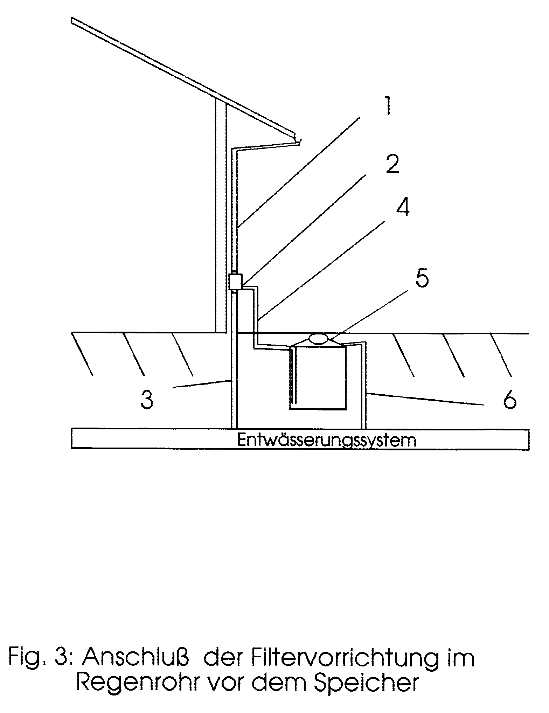

Das Regenwasser wird von den Dachauffangflächen über Fallrohre (1) abgeleitet. Im Fallrohr in einer gut zugänglichen Höhe wird die Filtervorrichtung (2) Fig. 3 eingebaut. Der Anschluß für das verschmutzte Regenwasser (3) wird an das Entwässerungssystem und der Anschluß für das gereinigte Wasser (4) an einen Speicher (5) mit Überlauf (6) angeschlossen Fig.3. Nach dem Heraustrennen eines definierten Fallrohr-Teilstücks wird zunächst das Oberteil (7) der Filtervorrichtung Fig.2 über das obere Fallrohr (1) gesteckt und in die Höhe gezogen. Daraufhin wird das Unterteil (8) fixiert mit dem Mittelteil (16) in das Fallrohr (3) und der Inneneinsatz (9) in die Filtervorrichtung eingesetzt. Nach Absenken des Oberteils (7) und Einsetzen der transparenten Abdeckung (10) ist die Filtervorrichtung funktionsbereit.

Das Regenwasser wird über den oberen Anschluß (11) auf 1. Filterfläche (12), die etwa 60-70% des Zulaufs überspannt, geleitet. Unter den Filterflächen befindet sich jeweils eine Tasche (13), die das gereinigte Wasser in einen separaten Ablauf (14) führt. Die Filterelemente sind etwa 60-70° in Strömungsrichtung des Regenwassers geneigt. Der überwiegende Teil des Wassers tritt gereinigt durch das Filtergewebe mit der Maschenweite von 0,15 mm. Ein Teilstrom angereichert mit dem Schmutz wird auf 2. Filterfläche (15) geleitet. Auf 2. Filterelement treffen darüberhinaus etwa 30-40% des nicht vom 1. Filterelement erfassten Wassers. Das gewährleistet eine ausreichende Spülung und den Abtransport von Schmutzanteilen von 2. Filterfläche. In Fließrichtung des Regenwassers gesehen überdecken die beiden Filterflächen den Querschnitt der Filtervorrichtung vollständig. Darüberhinaus überlagern sich die beiden Filterflächen zu etwa 30-50%. Das gewährleistet eine 100%-ige Nutzung des Regenwassers in der Filtervorrichtung.

Damit eine ausreichende Selbstreinigung eintritt, muß ein möglichst großer Neigungswinkel β der Filterflächen (12) und (15) angestrebt werden. Die Tangentialkomponente FT der Schwerkraft Fg, die die Beschleunigung der abgelagerten Schmutzpartikel verursacht, steigt proportional mit dem Sinus des Neigungswinkels β an. Nimmt man in 1.Näherung an, daß die Coulomb-Reibung die wesentliche Komponente des Reibungsmechanismus darstellt, so nimmt bei steigendem Neigungswinkel β die Normalkomponente FN, mit der die Reibungskraft FR über den Reibungskoeffizienten µ zusamenhängt, proportional mit Cosinus β ab. Ein Schmutzpartikel auf der Filterfläche wird immer dann in Bewegung gesetzt, wenn FT > FR erfüllt ist. Dies kann auch als eine mathematische Ungleichung formuliert werden:
FT / FR > 1 .

Bezieht man die Kräfte auf die Schwerkraft und setzt die entsprechenden Ausdrücke in die Ungleichung ein, so folgt: tan β > µ .

Typischerweise liegen die Werte für den Reibungskoeffizienten µ für trockene rauhe Oberflächen im Bereich 1-2. Daraus resultieren für den Neigungswinkel die entsprechenden Werte von 45-63°. Für eine gute Selbstreinigung sollte der Neigungswinkel von 45° nicht unterschritten werden.

Durch eine optimale Selbstreinigung der Filterflächen bei einem bevorzugten Neigungswinkel von 60-70° ist das Filtersystem auch bei längeren Wartungsintervallen verstopfungssicher. Bei einer entsprechenden Dimensionierung genügt eine einmalige jährliche Inspektion der Filtervorrichtung.

## Patentansprüche

1. Verfahren zum Reinigen des Wassers in dem Zulauf zum Regenwasserspeicher,
gekennzeichnet dadurch,
daß das Wasser zwangsweise an mehreren nacheinander angeordneten in Fließrichtung, bevorzugterweise in einem Winkel β von 60-70° geneigten den lichten Querschnitt jeweils teilweise, im wesentlichen zu 60-70%, überspannenden Filterflächen geleitet wird, wobei die in dem Dachablaufwasser enthaltenen Schmutzpartikel an der Filterelementen abgeschieden und mit einem Teilstrom des Wassers dem Abwasser zugeführt werden und der Hauptstrom des derart gereinigten Wasser keine Schmutzpartikel oberhalb der Porengröße der Filterelemente aufweist.

2. Verfahren nach Schutzanspruch 1,
gekennzeichnet dadurch,
daß mittels der Filterelemente unterschiedlicher Maschenweite der Trennschnitt, verstanden als der Restanteil der Verunreinigungen im gereinigten Wasser, entsprechend dem lokalen Schmutzanfall und den Anforderungen an die Wasserqualität frei wählbar ist.

3. Verfahren nach Schutzanspruch 1,
gekennzeichnet dadurch,
daß der jeweilige lichte Querschnitt aller Öffnungen, über die Wasserteilströme geleitet werden, mindestens 50% der Größe der angeschlossenen wasserzuführenden Elemente beträgt.

4. Verfahren nach Schutzanspruch 1,
gekennzeichnet dadurch,
daß von der Gesamtheit der Filterelemente stets der lichte Querschnitt der wasserführenden Elemente vollständig überspannt wird.

5. Vorrichtung zur Ausübung des Verfahrens nach Ansprüchen 1-4,
gekennzeichnet dadurch,
daß in einem mehrteiligen, im wesentlichem zweiteiligen Gehäuse ein Einsatz mit mehreren seitlichen von Filterelementen überspannten Taschen, über die das gereinigte Wasser abgeleitet und seitlich abgeführt wird, vorhanden ist.

6. Vorrichtung zur Ausübung des Verfahrens nach Anspruch 5,
dadurch gekennzeichnet,
daß das Gehäuse Universalanschlüsse zum Einbau in die von den Dächern führenden Fallrohre und eine Öffnung mit transparenter Abdeckung, durch die der gesamte Einsatz mit Filterelementen entnehmbar angeordnet ist, aufweist.

7. Vorrichtung zur Ausübung des Verfahrens nach Anspruch 1-4,
dadurch gekennzeichnet,
daß die Filter einzeln auswechselbar angeordnet sind.

8. Vorrichtung zur Ausübung des Verfahrens nach Anspruch 5,
dadurch gekennzeichnet,
daß die Abführung des gereinigten Wassers seitlich vom Anschluß an das Entwässerungssystem unterhalb des Bodenteilneveaus, vorzugsweise durch den Boden, erfolgt.
